# EUROPEAN PATENT APPLICATION

(11) **EP 4 811 212 A1**
(43) Date of publication of application: **23.09.2026**
(21) Application number: 25305381.3
(22) Date of filing: 19.03.2025
(51) Int. Cl.: G06K 19/077

(54) **CONTACTLESS MODULE WITH CAVITY**

(71) Applicant: THALES DIS FRANCE SAS, 92190 Meudon (FR)
(72) Inventor: DOSSETTO, Lucile, 83270 Saint Cyr Sur Mer (FR); OTTOBON, Stephane, 83270 Saint Cyr Sur Mer (FR); CHARLES, Luc, 13006 Marseille (FR)
(74) Representative: Castelo, Jérôme

(57) **Abstract**

This disclosure relates to a contactless module (100) with a cavity (106) for an antenna connection. The contactless module (100) includes a substrate (102). The substrate (102) includes a cavity (106) formed therein. The contactless module (100) further includes at least one electronic chip (108) disposed in the cavity (106). The contactless module (100) further includes at least one electrical conductor (112) connected to each of the at least one electronic chip (108). Each of the at least one electrical conductor (112) flushes to a surface of the substrate (102). The contactless module (100) further includes a connecting means for connecting the at least one electrical conductor (112) to the antenna.

## Description

### FIELD OF THE INVENTION

The present disclosure relates to a field of contactless electronic module, and more specifically to contactless module with cavity for antenna.

### BACKGROUND OF THE INVENTION

Data carriers such as smartcards (e.g. payment cards, memory cards, SIM cards, access control cards, and the like) consist of an electronic module which are intended to perform various operations (such as payment operation, authentication operation, network communication, etc). These operations are typically conducted by means of a coupling of electronic module and an external device (such as an external receiver or reader unit). The coupling may occur either a physical contact or without physical contact being established between the data carrier and the external devices. The data carrier includes an electrical element (such as a pattern of metal contact) that electrically connects to the electronic module. Further, with advancement in technology the data carriers are operate without an electrical connection and the electronic module may be referred as a contactless electronic module.

In the present state of art, several contactless electronic modules exist. However, the contactless electronic module may use a leadframe (i.e. electrically conductive material or structure) through which a communication between the contactless electronic module with an external device is established. Further, the contactless electronic module is thicker. Further, the contactless electrical module is costly. Therefore, to address the above-listed drawbacks, there is a growing need for a contactless module with cavity for antenna.

The present invention is directed to overcome one or more limitations stated above or any other limitations associated with the known arts.

### SUMMARY

The following embodiments presents a simplified summary in order to provide a basic understanding of some aspects of the disclosed invention. This summary is not an extensive overview, and it is not intended to identify key/critical elements or to delineate the scope thereof. Its sole purpose is to present some concepts in a simplified form as a prelude to the more detailed description that is presented later.

Some example embodiments disclosed herein provide a contactless module with a cavity for an antenna connection, the contactless module may include a substrate. The substrate may include a cavity formed therein. The contactless module may further include at least one electronic chip disposed in the cavity. The contactless module may further include at least one electrical conductor connected to each of the at least one electronic chip. It should be noted that each of the at least one electrical conductor flushes a surface of the substrate. In other words, said electrical conductor are in close proximity with surface of the substrate. Advantageously, the at least one electrical conductor is located at a distance from the surface comprised between 0 and 75µm, preferably between 15 and 35µm, more preferably around 20µm. The contactless module may further include a connecting mean connecting the at least one electrical conductor to the antenna.

According to some example embodiments, the contactless module may further include a removable adhesive tape positioned on a backside of each of the at least one electronic chip to facilitate the placement in the cavity.

According to some example embodiments, depth of the cavity is at least equal to height of each of the at least one electronic chip .

According to some example embodiments, the placement of each of the at least one electrical conductor is arranged within 75µm to the surface of the substrate facilitates bonding to the antenna to improve reliability of final product. The at least one electrical conductor connecting two electronic chips together. The electronic chip and the at least one electrical conductor placed between the substrate and hot melt.

According to some example embodiments, the substrate is selected from a group consisting of paper, plastic, polymer and fibre-reinforced plastics.

According to some example embodiments, the cavity is formed by mechanical punching along with the formation of marks on the substrate.

According to some example embodiments, the at least one electrical conductor is flattened to improve the connection with ACF.

According to some example embodiments, a maximum thickness of the contactless module is 250µm.

According to some example embodiments, a contactless module may further include an encapsulation element covers the at least one electronic chip (108) and at least one part of the at least one electrical conductor.

Some example embodiments disclosed herein provide a method for manufacturing a contactless module with a cavity for an antenna, the method may include forming the cavity in a substrate. The method may further include placing at least one electronic chip in the cavity. The method may further include connecting at least one electrical conductor to each of the at least one electronic chip. It should be noted that each of the at least one electrical conductor flushes a surface of the substrate. The method may further include bonding the at least one electrical conductor to an antenna by a connecting mean .

Advantageously, the method for manufacturing a contactless module according to the invention is a reel to reel method. Such reel to reel method refers to a continuous production process where materials, such as plastic or metal foil, are fed from a roll (reel), processed through various steps, and then wound onto another reel.

According to some example embodiments, positioning a removable adhesive tape on a backside of each of the at least one electronic chip (108) to facilitate the placement in the cavity.

According to some example embodiments, the substrate is selected from a group consisting of paper, plastic, polymer and fibre-reinforced plastics.

According to some example embodiments, the cavity is formed by mechanical punching process along with the formation of marks aiming to delimit encapsulation and marks for positioning the substrate.

According to some example embodiments, depth of the cavity is at least equal to height of each of the at least one electronic chip.

According to some example embodiments, a maximum thickness of the contactless module is 250µm. Preferably, the maximum thickness of the contactless module is 200µm. More preferably, the maximum thickness of the contactless module is 150µm.

The foregoing summary is illustrative only and is not intended to be in any way limiting. In addition to the illustrative aspects, embodiments, and features described above, further aspects, embodiments, and features will become apparent by reference to the drawings and the following detailed description.

### DEFINITIONS

The term 'contactless module' as used herein in the specifications refers to a compact, non-contact electronic module typically used in applications such as smart cards, payment cards, or identification systems. These contactless modules enable secure, wireless communication between the card or device and a reader without needing physical contact.

The term 'substrate' as used herein in the specifications may be defined as, a foundational material (or structure) upon which the electronic components are constructed. Key functions of the substrate in electrical and electronic applications include providing mechanical support, thermal management, and electrical insulation between layers.

The term 'electronic chip' as used herein in the specifications may refer as an Integrated Circuit (IC). The electronic chip is a small electronic device made up of multiple interconnected electronic components such as transistors, resistors, and capacitors. These components are etched onto a small piece of semiconductor material (such as silicon, etc). The electronic chips are configured to perform various functions such as processing, communication and storing information.

The term 'electrical conductor' as used herein in the specifications may be defined as, a material or substance that allows the flow of electricity through it. In other words, the electrical conductor corresponds to an electrical wire.

The term 'Anisotropic Conductive Film (ACF)' as used herein in the specifications may use as an adhesive for securing and electrically connecting electronic components, like antenna to electrical conductor.

The term 'protective element' as used herein in the specifications may refer as a protective guard (or protective shield) configured to protect (or prevent) the electronic chip from the dust, other chemical reactions, and the like.

### BRIEF DESCRIPTION OF THE DRAWINGS

The above and still further example embodiments of the present invention will become apparent upon consideration of the following detailed description of embodiments thereof, especially when taken in conjunction with the accompanying drawings, and wherein:
FIGS. 1a -1b illustrate various components of a contactless module, in accordance with an example embodiment;
FIG. 2 illustrates an exemplary contactless module, in accordance with some an example embodiment;
FIGS. 3a - 3b illustrate cross-sectional view of a contactless module, in according with an example embodiment;
FIG. 4 illustrates a cross-sectional view of deployment of a contactless module in a data carrier, in accordance with an example embodiment;
FIG. 5 illustrates a flow diagram of a method for manufacturing contactless module with a cavity for an antenna, in accordance with some an example embodiment;

The figures illustrate embodiments of the invention for purposes of illustration only. One skilled in the art will readily recognize from the following description that alternative embodiments of the structures and methods illustrated herein may be employed without departing from the principles of the invention described herein.

### DETAILED DESCRIPTION

In the following description, for purposes of explanation, numerous specific details are set forth in order to provide a thorough understanding of the present invention. It will be apparent, however, to one skilled in the art that the present invention can be practiced without these specific details. In other instances, systems, apparatuses, and methods are shown in block diagram form only in order to avoid obscuring the present invention.

Reference in this specification to "one embodiment" or "an embodiment" or "example embodiment" means that a particular feature, structure, or characteristic described in connection with the embodiment is included in at least one embodiment of the present invention. The appearance of the phrase "in one embodiment" in various places in the specification are not necessarily all referring to the same embodiment, nor are separate or alternative embodiments mutually exclusive of other embodiments. Further, the terms "a" and "an" herein do not denote a limitation of quantity, but rather denote the presence of at least one of the referenced items. Moreover, various features are described which may be exhibited by some embodiments and not by others. Similarly, various requirements are described which may be requirements for some embodiments but not for other embodiments.

Some embodiments of the present disclosure will now be described more fully hereinafter with reference to the accompanying drawings, in which some, but not all, embodiments of the invention are shown. Indeed, various embodiments of the invention may be embodied in many different forms and should not be construed as limited to the embodiments set forth herein; rather, these embodiments are provided so that this disclosure will satisfy applicable legal requirements. Like reference numerals refer to like elements throughout.

The terms "comprise", "comprising", "includes", or any other variations thereof, are intended to cover a non-exclusive inclusion, such that a setup, device, or method that comprises a list of components or steps does not include only those components or steps but may include other components or steps not expressly listed or inherent to such setup or device or method. In other words, one or more elements in a system or apparatus proceeded by "comprises... a" does not, without more constraints, preclude the existence of other elements or additional elements in the system or method.

The embodiments are described herein for illustrative purposes and are subject to many variations. It is understood that various omissions and substitutions of equivalents are contemplated as circumstances may suggest or render expedient but are intended to cover the application or implementation without departing from the spirit or the scope of the present invention. Further, it is to be understood that the phraseology and terminology employed herein are for the purpose of the description and should not be regarded as limiting. Any heading utilized within this description is for convenience only and has no legal or limiting effect.

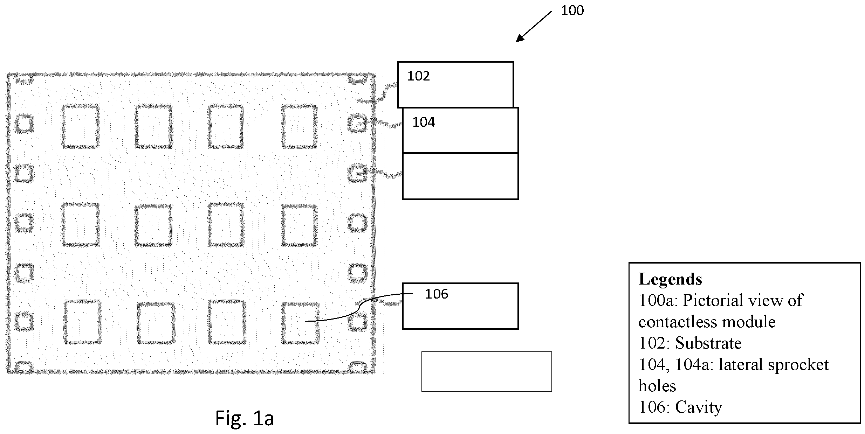

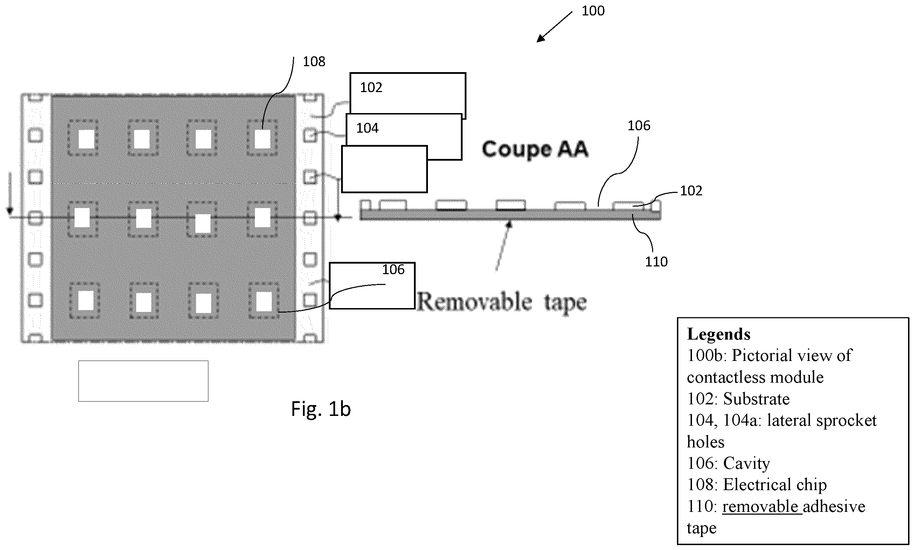

Embodiments of the present disclosure may provide a contactless module with cavity for improved antenna connection. The contactless module with cavity for improved antenna connection in such an improved manner are described with reference to FIG. 1 to FIG. 5 as detailed below.

Referring now to FIG. 1a, representing various components of a contactless module is illustrated via a pictorial depiction 100, in accordance with an example embodiment. The contactless module is an electronic module typically used in applications such as smart cards, payment cards, or identification systems. The contactless modules enable secure, wireless communication between the card or device and a reader without needing any physical contact. The contactless module may include a substrate 102. The substrate 102 may be a structure (or material) on which electrical components (such as chips, capacitors, transistors, resistors, etc) are constructed. The substrate 102 is electrically non-conductive. In other words, the substrate 102 may not include any electrically conductive materials or elements.

The substrate 102 is selected from a group consisting of paper, plastic, polymer, and fibre-reinforced plastics. The polymers may be at least one of, for example, synthetic polymers, thermoplastic polymers, thermosetting plastics, and the like. The polymers may be, for example, but may not be limited to, polyethylene terephthalate (PET), polyethylene naphtholate (PEN), polyvinyl chloride (PVC), polycarbonate (PC), epoxy, polyester, and polyimide. The fibre-reinforced plastics may be, for example, but may not be limited to, an epoxy resin, and polyester resin. It should be noted that the substrate 102 may be very thin (i.e. z-dimension) and smaller (i.e. x-y dimension) in size. The substrate 102 may be formed using a bio-sourced material or a recycled material.

Further, the substrate 102 may include a cavity 106 formed therein. In some embodiments the cavity 106 is through hole which is a hole or via that extends completely through a layer or substrate. In another embodiment the cavity 106 is a non-through hole which is a hole or via that does not go completely through the substrate or layer. The cavity 106 is formed by mechanical punching along with the formation of marks 104 on the substrate 102. The cavity 106 may be, for example, but may not be limited to, a through hole, and a non-through hole. In some embodiments, the cavity 106 may be formed on the substrate 102 by using several other mechanisms (such as water jet cutting, milling, chemical etching, and the like). It should be noted that number of cavities may be formed on the substrate 102 as per a user requirement. The cavity 106 may be uniformly distributed (or arranged) on the substrate 102. Depth of the cavity 106 is at least equal to height of each of at least one electronic chip. In some embodiments, the depth of the cavity 106 is less than the height of each of the electronic chip.

The marks 104 may also be known as perforations. The marks104 is formed along edges of the substrate 102. The marks 104 may be aiming to delimit encapsulation. Additionally, the marks 104 may be used for positioning the substrate 102. The marks 104 may be a hole. In an embodiment, the marks 104 may be a printed mark. By way of an example, the marks104 is presented on a left edge and a right edge of the substrate 102. In other words, a series of marks104 is formed along with the edges of the substrate 102. As depicted in FIG. 1b, the marks104 is presented in small rectangular shapes.

Referring now to FIG. 1b, at least one electronic chip 108 of the contactless module is illustrated via a pictorial depiction 100, in accordance with an example embodiment. The contactless module may further include the at least one electronic chip 108. The at least one electronic chip 108 may also be known as a die. The at least one electronic chip 108 may include several contactless functionalities such as a Radio Frequency (RF) functionality, Near-Field Communication (NFC) functionality, and the like. These functionalities may be configured for receiving or transmitting the RF signals, etc. By way of an example, the at least one electronic chip 108 may be made using materials such as silicon wafers. The at least one electronic chip 108 may be, for example, but may not be limited to, Integrated Circuit (IC) chips, memory chips, microprocessor chips, microcontroller chips, and analog chips.

The at least one electronic chip 108 is disposed in the cavity 106. In some embodiments the cavity 106 is through hole which is a hole or via that extends completely through a layer or substrate. In another embodiment the cavity 106 is a non-through hole which is a hole or via that does not go completely through the substrate or layer. In some embodiments, a surface of each of the at least one electronic chip 108 is in direct contact with a surface of the substrate 102. The contactless module may further include a removable adhesive tape 110 positioned on a backside of each of the at least one electronic chip 108 to facilitate the placement in the cavity 106. The removable adhesive tape 110 may be, for example, but may not be limited to, a double-sided tissue tape, a double-sided polyester tape, a transfer tape, and an aramid tape. By way of an example, the removable adhesive tape 110 may be represented as in 'green colour'. The contactless module may further include at least one electrical conductor (not shown). The at least one electrical conductor may correspond to an electrical wire. The at least one electrical conductor may be made using materials such as, gold, silver, copper, aluminium, palladium, brass, and the like. The at least one electrical conductor may be, for example, but may not be limited to, ribbon wires. In a preferred embodiment, the ribbon wire (i.e. electrical conductor) is used for connectivity. It should be noted that thickness of each of the at least one electrical conductor is higher than a standard thickness (e.g. about 20 - 25 µm) of the electrical conductor to facilitate the bonding.

It should be noted that the at least one electrical conductor is connected to each of the at least one electronic chip 108. The placement of each of the at least one electrical conductor flushes within a range of (0 - 75)µm to the surface of the substrate (102) facilitates bonding. The at least one electronic chip 108 and the at least one electrical conductor 112 may be placed between the substrate 102 and hot melt. By way of an example, the at least one electrical conductor is connected (e.g., 20 µm) to the surface or very close to the surface of the substrate 102 to facilitates an ACF bonding. In some embodiments, if the at least one electrical conductor is placed too high above the surface of the substrate 102 the ACF bonding become ineffective.

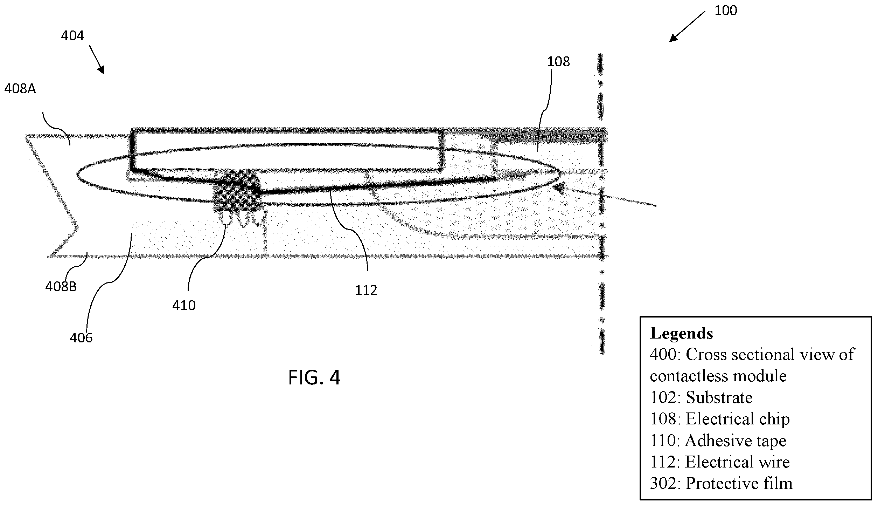

The contactless module may further include a connecting means (not shown). The connecting means may be, for example, but may not be limited to, an Anisotropic Conductive Film (ACF), a silver glue, an isotropic conductive material, and a solder paste. This is further explained in greater detail in conjunction with FIG. 4.

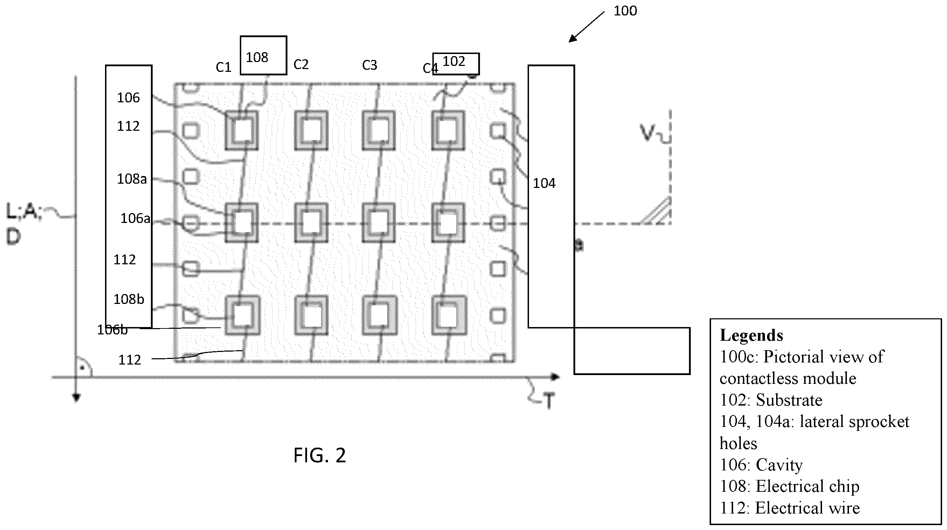

Referring now to FIG. 2, a top view of an exemplary contactless module 100 is illustrated, in accordance with an example embodiment. FIG. 2 is explained in conjunction with FIGS. 1a - 1b. As depicted in FIG. 2, the contactless module 100 may include the substrate 102. The substrate 102 is selected from a group consisting of paper, plastic, polymer, and fiber-reinforced plastics. The substrate 102 may also be formed using a bio-sourced material or a recycled material. By way of an example, the recycled material may be an organic material, industrial-byproduct, and the like. The substrate 102 may include a plurality of cavities (such as the cavity 106) formed therein. The plurality of cavities is formed by mechanical punching along with the formation of the marks104 on the substrate 102.

Each of the plurality of cavities may be uniformly distributed on the substrate 102. Each of the plurality of cavities is formed (or arranged) parallel to one another as well as parallel with respect to the marks104 on the substrate 202. By way of an example, the substrate 102 may include four columns (e.g. C1, C2, C3, and C4). Each of the four columns may include three cavities. In continuous with the above example 'C1' may include the three cavities (such as the cavity 106). Further, the contactless module 100 may include three electronic chips (cumulatively referred as 108).

Each of the three electronic chips are disposed in three cavities (cumulatively referred as 106) respectively. Each of the three electronic chips may include the removable adhesive tape 110 on its backside to facilitate placement in the cavities. Further, each of the three electronic chips may include the electrical conductor 112 for their connectivity. Each of the electrical conductor flushes a surface of the substrate 102. In other words, the electrical conductor is connected or arranged very close to the surface of the substrate 102 facilitates a bonding. In an embodiment, each of the electronic conductors may be arranged within a range of (0 - 75)µm to the surface of the substrate 102 to an antenna to improve reliability of the contactless module 100 (i.e., final product). In some embodiments the range may be (15-35)µm, yet in another embodiment the range may be 20µm for arranging electronic conductors. It should be noted that each of the electronic conductors may be configured to connect two electronic chips together.

Each of the electrical conductors may include two free ends (i.e. a first free end and a second free end). In a preferred embodiment, the first free end of each of the electrical conductors may be connected with each of the electronic chips respectively. Each of the electrical conductors may be connected with the surface of the substrate 102.

Further, the second free end of each of the electrical conductors may be connected with the surface of the substrate 102. By way of an example, the electronic chip 108 is connected with the other electronic chip 108 using the electrical conductor 112 in a particular arrangement. Similarly, the two electronic chips 108 may be connected with each other using the electrical conductor 112. Each of the electrical conductors may be arranged in a staggered manner (or mirror-inverted manner). In a preferred embodiment, the electrical conductors may be arranged in the staggered manner. Each of the electrical conductors may be arranged in a region diagonally opposite to the corner region of a square (i.e. the electronic chip).

As depicted in FIG. 2, direction 'A' may correspond to straight lines run parallel with respect to one another as well as parallel with respect to a longitudinal direction 'L' of a reel cutting machine. By way of an example, the connection direction 'L' of each of the electrical conductors (cumulatively refereed as 112) may run parallel to the arrangement direction 'A'. Consequently, the connection direction 'D' of each of the electrical conductors may run parallel to the longitudinal direction 'L' of the reel-cutting machine. In a preferred embodiment, each of the electrical conductors may be arranged on the surface of the electronic chip respectively. Each of the electrical conductors may be arranged opposite to one another with respect to a fictitious vertical plane 'V' running vertically with respect to the surface of each electronic chips.

Further, the contactless module 100 may include a connecting means for connecting each of the electrical conductors to an antenna. The connecting means may be, for example, but may not be limited to, an Anisotropic Conductive Film (ACF), an isotropic conductive material, a solder paste, and a silver glue. In a preferred embodiment, the ACF (i.e., the connecting means) is used to connect each of the electrical conductors to the antenna. Each of the electrical conductors may be flattened (or connected) towards the substrate 102 to improve the connection with the ACF. It should be noted that, a maximum thickness of the contactless module may be 250 µm. An encapsulation element covers each of the electronic chip and at least one part of each of the electrical conductors. In an embodiment, the thickness of the contactless module 100 is 150µm. By way of an example, the thickness of each of the electronic chip may be 80 µm and the thickness of each of the electrical conductor may be 50 µm. By which the total thickness of the contactless module 100 may be 150 µm. Similarly, same component arrangements are used for rest of the columns.

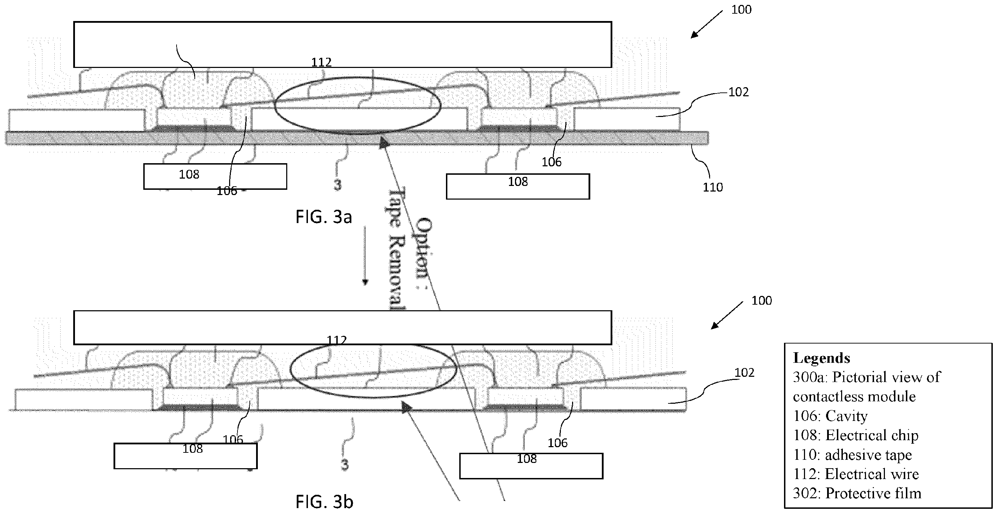

Referring now to FIG. 3a, a cross-sectional view of an exemplary contactless module 100 is illustrated, in accordance with an example embodiment. FIG. 3a is explained in conjunction with FIGS. 1a - 1b and 2. As depicted in FIG. 3a, the contactless module 100 (such as the contactless module 100) may include the substrate 102.The substrate 102 may include two cavities (cumulatively referred as 106) formed therein. The contactless module 100 may further include two electronic chips (cumulatively referred as 108).

Each of the two electronic chips may include the removable adhesive tape 110. The removable adhesive tape 110 may be positioned on a backside of each of the two electronic chips to facilitate the placement in the two cavities respectively. Each of the two electronic chips 108 is disposed in the cavities 106 respectively using the adhesive tape 110.

Each of the two electronic chips is connected to each other using an electrical conductor 112 The placement of electrical conductor 112 flushes within a range of (0 - 75) µm to a surface of the substrate 102 facilitates bonding. In particular, the placement of electrical conductor 112 flushes the surface of the substrate 102 facilitates the ACF bonding to improve reliability of the contactless module. In an embodiment, each of the electronic conductors may be arranged within a range of (0 - 75)µm to the surface of the substrate 102 to an antenna to improve reliability of the contactless module 100 (i.e., final product). In some embodiments the range may be (15-35)µm, yet in another embodiment the range may be 20µm for arranging electronic conductors. The electrical conductor 112 may include two free ends (e.g. a first free end and a second free end). The first free end of the electrical conductor may be connected with a surface of the electronic chip 108 and the second free end of the electrical conductor 112 may be connected with a surface of another electronic chip 108.

Further, the contactless module 100 may include an encapsulation element to cover each of the electronic chips and at least one part of the electrical conductor 112. The encapsulation element may include a resin. The resin may be, for example, but may not be limited to, epoxy resin, and acrylate resin. These resins may be UV-cured or thermal-cured that may be applied by resin dispensing or in a moulding process, and the like. The encapsulation element may partially covers the electronic chips (cumulatively referred as108) and the electrical conductor 112. In other words, the encapsulation element may protect the electronic chips and electrical conductor 112. Each of the two electronic chips may be protected from dust particles, chemical reactions, and the like via the encapsulation element. By way of an example, the encapsulation element may be represented in a dome shape over each of the electronic chips.

Referring now to FIG. 3b, a cross-sectional view of another exemplary contactless module 100 is illustrated, in accordance with an example embodiment. FIG. 3b is explained in conjunction with FIG. 3a. As depicted in FIG. 3b, the contactless module 100 may include the two electronic chips (such as the electronic chip 108). In a preferred embodiment, each of the two electronic chips may not include the removable adhesive tape 110. In such scenarios, the user may use an adhesive substrate. The adhesive substrate may include an adhesive property itself. It should be noted that the adhesive substrate may include a thermoset resin (such as an epoxy thermoset resin, silicon resin, phenolic resin, polyurethane resin, polyester resin, and the like) by which each of the two electronic chips is disposed in the cavities respectively on the substrate 102. Rest of the components and functionalities is same as already explained above in FIG. 100.

Referring now to FIG. 4, represents a cross-sectional view of a contactless module 100 placed in a data carrier 404 is illustrated, in accordance with an example embodiment. FIG. 4 is explained in conjunction with FIG. 2. As depicted in FIG. 4, the contactless module 100 is deployed (or provided) in the data carrier 404. The data carrier 404 may constitute or the part of the security documents such as, a smart card, a credit card, debit card, a driving licence, an identity card (e.g. PAN card, and the like), a passport, a data page, and the like.

The data carrier 404 may include a carrier body 406. The carrier body 406 may also be known as a card body. The carrier body 406 may further include a top section 408A and a bottom section 408B. The contactless module 100 may be connected with the data carrier 404 through the top section 408A of the carrier body 406. The carrier body 406 may further include the cavity. The contactless module 100 and an antenna 410 is arranged in the cavity for their communication. The antenna 410 may be, for example, but may not be limited to, Near Field Communication (NFC) antenna, and Radio Frequency Identification (RFID) antenna.

It should be noted that the contactless module 100 may not be embedded (or arranged) within the data carrier 404. The contactless module 100 may be arranged in a region of the top section 408A of the data carrier 404. The contactless module 100 may include the electrical conductor 112. The contactless module 100 may further include an ACF configured to connect the electrical conductor 112 to the antenna 410. The placement of electrical conductor 112 within 20µm flushes to a surface of the substrate 102 to facilitates ACF bonding.

The electrical conductor 112 is placed at a surface or very close to the surface of the substrate to allow ACF bonding. The ACF may be made using the material such as a resin (e.g. thermoset epoxy resin), and the like in which the conductive particles are dispersed. In some embodiments, the substrate 102 may include a dielectric material. The conductive particles of the ACF may be pressed on the electrical conductor 112 through the backside support of the dielectric.

It should be noted that, to improve the ACF connection with the conductor 112. A diameter of the electrical conductor 112 of the contactless module 100 may be kept bigger than a standard electrical conductor. By way of an example, the contactless module 100 may include the electrical conductor 112 with the diameter (i.e. about 30 µm) instead of (e.g. about 20 µm- 25 µm). In a preferred embodiment, a mechanism (such as crushing, squashing, and the like) may be used to increase the connection surface as the electrical conductor 112 (e.g. a ribbon wire) become flat.

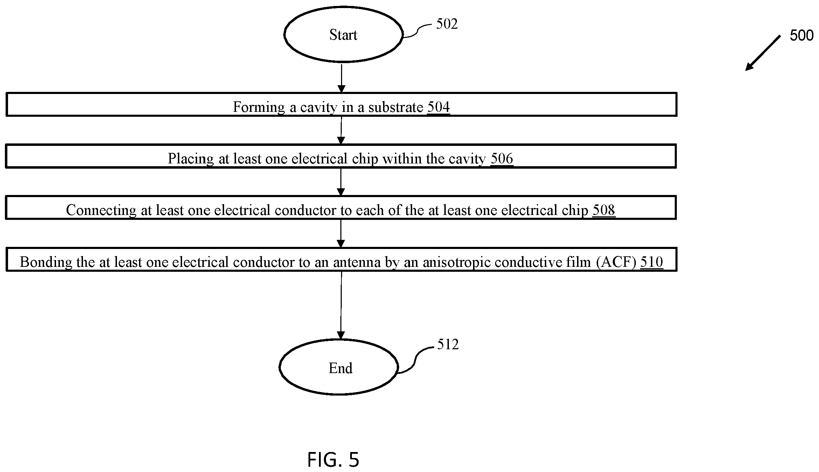

Referring now to FIG. 5, an exemplary process 500 for manufacturing a contactless module with a cavity for an antenna is illustrated via a flow chart, in accordance with an example embodiment. FIG. 5 is explained in conjunction with FIGS. 1 - 4. In some embodiments, the process 500 may start at step 502. Further, the process 500, at step 504, may include forming the cavity in a substrate. The substrate is selected from a group consisting of paper, plastic, polymer, and fibre-reinforced plastics. The substrate may be formed using a bio-sourced material or recycled material. It should be noted that the substrate may not include any metal material. The cavity is formed by mechanical punching process along with the formation of marks on the substrate.

Further, once the cavity is formed on the substrate, the process 500, at step 506, may include placing at least one electronic chip in the cavity. Depth of the cavity is at least equal to height of each of the at least one electronic chip. Further, the process 500 may include positioning a removable adhesive tape on a backside of each of the at least one electronic chip to facilitate the placement in the cavity.

Further, the process 500, at step 508, may include connecting at least one electrical conductor to each of the at least one electronic chip. Each of the at least one electrical conductor flushes a surface of the substrate. In an embodiment, each of the electronic conductors may be arranged within a range of (0 - 75)µm to the surface of the substrate 102 to an antenna to improve reliability of the contactless module 100 (i.e., final product). In some embodiments the range may be (15-35)µm, yet in another embodiment the range may be 20µm for arranging electronic conductors.

Further, the process 500, at step 510, may include bonding each of the at least one electrical conductor to an antenna by a connecting means (e.g., ACF). It should be noted that the maximum thickness of the contactless module is 250µm. Further, the process 500 may end, at step 512.

As will be appreciated by those skilled in the art, the techniques described in the various embodiments discussed above are not routine, or conventional, or well understood in the art. The techniques discussed above provide for innovative solutions to address the challenges associated with generating holistic responses based on structural and semantic queries. The disclosed techniques offer several advantages over the existing methods:
ECO Design: The disclosed contactless module is designed by considering minimum environment impact throughout the product life cycle.

Very low thickness of the contactless module: The disclosed contactless module introduces a cavity on the substrate which helps to the reduce the thickness of the contactless module. The thickness of the disclosed contactless module is about 150µm.

Cost effective: The disclosed contactless module uses a non-conductive substrate. Additionally, the contactless module may not use any film or grid made of metals.

A substrate: The disclosed contactless module may use the substrate which can be formed using a bio-sourced materials, or recycled material.

Anisotropic Conductive Film (ACF): The disclosed contactless module uses the ACF film for connecting the contactless module to an antenna which may reduce the risk of short circuit, reduce the heat stress, improve efficiency, reliability, and flexibility.

Maximum reuse of current processes and equipment: The disclosed contactless module reuse the current process and equipment.

A contactless module: The disclosed contactless module may be used for a contactless module embedded in a card (such as a credit cards, debit cards, or any smart cards. Additionally, the disclosed contactless module may be used for a contactless module inside a laminated card.

Many modifications and other embodiments of the inventions set forth herein will come to mind to one skilled in the art to which these inventions pertain having the benefit of the teachings presented in the foregoing descriptions and the associated drawings. Therefore, it is to be understood that the inventions are not to be limited to the specific embodiments disclosed and that modifications and other embodiments are intended to be included within the scope of the appended claims. Moreover, although the foregoing descriptions and the associated drawings describe example embodiments in the context of certain example combinations of elements and/or functions, it should be appreciated that different combinations of elements and/or functions may be provided by alternative embodiments without departing from the scope of the appended claims. In this regard, for example, different combinations of elements and/or functions than those explicitly described above are also contemplated as may be set forth in some of the appended claims. Although specific terms are employed herein, they are used in a generic and descriptive sense only and not for purposes of limitation.

It is to be understood that the above description is intended to be illustrative, and not restrictive. For example, the above-discussed embodiments may be used in combination with each other. Many other embodiments will be apparent to those of skill in the art upon reviewing the above description.

With respect to the use of substantially any plural and/or singular terms herein, those having skill in the art can translate from the plural to the singular and/or from the singular to the plural as is appropriate to the context and/or application. The various singular/plural permutations may be expressly set forth herein for sake of clarity.

The benefits and advantages which may be provided by the present invention have been described above with regard to specific embodiments. These benefits and advantages, and any elements or limitations that may cause them to occur or to become more pronounced are not to be construed as critical, required, or essential features of any or all of the embodiments.

While the present invention has been described with reference to particular embodiments, it should be understood that the embodiments are illustrative and that the scope of the invention is not limited to these embodiments. Many variations, modifications, additions, and improvements to the embodiments described above are possible. It is contemplated that these variations, modifications, additions, and improvements fall within the scope of the invention.

## Claims

1. A contactless module (100) with a cavity (106) for an antenna connection, the contactless module (100) comprising:
a substrate (102) comprising the cavity (106) formed therein;
at least one electronic chip (108) disposed in the cavity (106);
at least one electrical conductor (112) connected to each of the at least one electronic chip (108), wherein each of the at least one electrical conductor (112) flushes a surface of the substrate (102); and
a connecting means connecting the at least one electrical conductor (112) to the antenna.

2. The contactless module (100) according to claim 1, further comprising a removable adhesive tape (110) positioned on a backside of each of the at least one electronic chip (108) to facilitate the placement in the cavity (106).

3. The contactless module (100) according to claim 1, wherein depth of the cavity (106) is at least equal to height of each of the at least one electronic chip (108).

4. The contactless module (100) according to any one of the preceding claims, wherein the placement of each of the at least one electrical conductor (112) is arranged within 75µm to the surface of the substrate (102) facilitates bonding to the antenna to improve reliability of final product, wherein the at least one electrical conductor (112) connects two electronic chips (108) together, and wherein the electronic chip (108) and the at least one electrical conductor (112) are placed between the substrate (102) and hot melt.

5. The contactless module (100) according to claim 1, wherein the substrate (102) is selected from a group consisting of paper, plastic, polymer and fibre-reinforced plastics.

6. The contactless module (100) according to any one of the preceding claims, wherein the cavity (106) is formed by mechanical punching.

7. The contactless module (100) according to any one of the preceding claims, wherein the at least one electrical conductor (112) is flattened to improve the connection with the connecting mean, said connecting mean comprising ACF.

8. The contactless module (100) according to any one of the preceding claims, wherein the maximum thickness of the contactless module is 250µm.

9. The contactless module (100) according to any one of the preceding claims, wherein an encapsulation element covers the at least one electronic chip (108) and at least one part of the at least one electrical conductor (112).

10. A method (500) for manufacturing a contactless module (100) with a cavity (106) for an antenna, the method comprising:
forming the cavity (106) in a substrate (102);
placing at least one electronic chip (108) in the cavity (106);
connecting at least one electrical conductor (112) to each of the at least one electronic chip (108), wherein each of the at least one electrical conductor (112) flushes a surface of the substrate (102); and
bonding the at least one electrical conductor (112) to an antenna by a connecting means.

11. The method (500) according to claim 10, further comprising positioning a removable adhesive tape (110) on a backside of each of the at least one electronic chip (108) to facilitate the placement in the cavity (106).

12. The method (500) according to any one of the previous claims, wherein the substrate (102) is selected from a group consisting of paper, plastic, polymer and fibre-reinforced plastics.

13. The method (500) according to any one of the previous claims, wherein the cavity (106) is formed by mechanical punching process along with the marks (104) aiming to delimit encapsulation and the marks for positioning the substrate (102)..

14. The method (500) according to any one any one of the previous claims, wherein depth of the cavity (106) is at least equal to height of each of the at least one electronic chip (108).

15. The method (500) according to any one of the any one of the previous claims, further comprising positioning a removable adhesive tape (110) on a backside of each of the at least one electronic chip (108) to facilitate the placement in the cavity (106).
